# EUROPEAN PATENT APPLICATION

(11) **EP 3 614 330 A1**
(43) Date of publication of application: **26.02.2020**
(21) Application number: 17900084.9
(22) Date of filing: 10.03.2017
(51) Int. Cl.: G06Q 50/10, G10L 15/26, G06Q 50/20, G09B 19/06

(54) **LEARNING CONTENT PROVIDING DEVICE USING BINARY PRINCIPLE, AND METHOD THEREFOR**

(71) Applicant: Kim, Koon, Seoul 06902 (KR)
(72) Inventor: Kim, Koon, Seoul 06902 (KR)
(74) Representative: dompatent von Kreisler Selting Werner - Partnerschaft von Patent- und Rechtsanwälten mbB
(86) International application number: PCT/KR2017/002613
(87) International publication number: WO 2018/164303

(57) **Abstract**

Provided is an apparatus and method for providing learning contents using a binary principle. The method includes performing learning by selecting a preset number of learning contents as a learning contents group in a state of including a plurality of learning contents in which one learning text and one learning correspondence text match with each other and allowing a learning text of each of learning contents included in the learning contents group and a learning correspondence text corresponding thereto to be displayed, sequentially performing processes of allowing the learning text to be displayed for each of learning contents included in the learning contents group and then waiting for a user response for a preset time after the above process, selectively including the corresponding learning contents in a re-learning contents group when a user response to the learning text is different from the learning correspondence text corresponding to the learning text during the above process, and sequentially performing processes of allowing the learning text to be displayed for each of learning contents included in the re-learning contents group and then waiting for a user response for a preset time after the above process.

## Description

### [Technical Field]

The present invention relates to an apparatus and method for providing learning contents, and more particularly, to an apparatus and method for providing learning contents which maximize learning efficiency by applying a binary principle using 0 and 1 as criteria for determination.

### [Background Art]

Many people study English or learn what is required for the purpose of employment, academic reason or the like. In this case, most people usually purchase teaching materials necessary for study.

For example, people studying English purchase and study vocabulary books containing tens of thousands of words to memorize English words, and people who prepare for civil service examinations purchase Korean history reference book for study. There is a limitation in that learning efficiency is very low when studying through printed books.

Recently, there are many services to watch videos through the Internet, but the Internet lecture is also conducted in such a way that a lecturer teaches necessary contents. Accordingly, the learning concentration is lowered, and the learning efficiency is not so high.

That is, in learning, learning maximum information in a minimum time, that is, learning efficiency is very important. Related-art methods do not sufficiently meet such expectations.

### [Disclosure]

### [Technical Problem]

Accordingly, the present disclosure provides an apparatus and method for performing learning so as to achieve a maximum learning effect with a minimum effort.

### [Technical Solution]

In one general aspect, a learning contents providing apparatus includes: a storage unit for storing a plurality of learning contents in which one learning text and one learning correspondence text match with each other; a learning performing unit for performing learning by selecting a preset number of learning contents among the plurality of learning contents stored in the storage unit as a learning contents group and allowing a learning text of each of learning contents included in the learning contents group and a learning correspondence text corresponding thereto to be outputted; a first learning state checking unit sequentially performing processes of allowing the learning text to be outputted for each of learning contents included in the learning contents group and then waiting for a user response for a preset time after the learning processing of the learning performing unit; a first response processing unit selectively including the corresponding learning contents in a re-learning contents group when a user response to the learning text is different from the learning correspondence text corresponding to the learning text during the processing of the first learning state checking unit; and a second learning state checking unit sequentially performing processes of allowing the learning text to be outputted for each of learning contents included in the re-learning contents group and then waiting for a user response for a preset time after the processing of the first learning state checking unit.

In another general aspect, a method of controlling a learning contents providing apparatus includes: performing learning by selecting a preset number of learning contents as a learning contents group in a state of including a plurality of learning contents in which one learning text and one learning correspondence text match with each other and allowing a learning text of each of learning contents included in the learning contents group and a learning correspondence text corresponding thereto to be displayed; sequentially performing processes of allowing the learning text to be displayed for each of learning contents included in the learning contents group and then waiting for a user response for a preset time after the above process; selectively including the corresponding learning contents in a re-learning contents group when a user response to the learning text is different from the learning correspondence text corresponding to the learning text during the above process; and sequentially performing processes of allowing the learning text to be displayed for each of learning contents included in the re-learning contents group and then waiting for a user response for a preset time after the above process.

Other features and aspects will be apparent from the following detailed description, the drawings, and the claims.

### [Description of Drawings]

FIG. 1 is a schematic configuration view illustrating an entire communication system including a learning contents providing apparatus according to an embodiment of the present invention.
FIG. 2 is a view illustrating a configuration of the learning contents providing apparatus of FIG. 1.
FIGS. 3 to 8 are views illustrating an example of a screen displayed on a user terminal communicating with a learning contents providing apparatus according to an embodiment of the present invention.
FIG. 9 and FIG. 10 are control flowcharts of a learning contents providing apparatus according to an embodiment of the present invention.

### [Best Mode]

Hereinafter, exemplary embodiments of the present invention will be described in detail with reference to the accompanying drawings.
exemplary embodiments of the present invention are merely examples for helping understanding of the present invention, and the present invention is not limited to these embodiments. In particular, the present invention can be configured by combining at least one of individual components, individual functions, or individual operations included in each embodiment.

In particular, some claims include alphabets such as '(a)' for convenience, but these alphabets do not define the order of the respective operations.

Hereinafter, each signal referred to in the embodiments of the present invention may refer to one signal transmitted by one connection or the like, but may also mean a series of signals transmitted for the purpose of performing a specific function. That is, in each embodiment, a plurality of signals transmitted at certain time intervals or transmitted after receiving a response signal from a counterpart device may be represented by a single signal name for convenience.

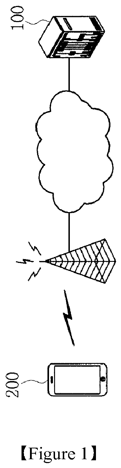

The schematic configuration of the entire communication system including a learning contents providing apparatus 100 according to an embodiment of the present invention is as shown in FIG. 1.

In FIG. 1, a user terminal 200 is a terminal operated by a user who proceeds learning, and for example, may be a portable wireless communication terminal such as a smart phone.

The learning contents providing apparatus 100 transmits a certain learning contents to the user terminal 200 in order to increase the learning efficiency of a user, and allows a user to solve a problem by oneself by presenting the problem without displaying at least a part of the learning content.

FIG. 1 illustrates that the learning contents providing apparatus 100 transmits learning contents and problems to a user terminal 200. However, the learning contents providing apparatus 100 may be configured to be integrated with a user terminal 200.

That is, the functions of the learning contents providing apparatus 100 described later may all be implemented on a user terminal 200.

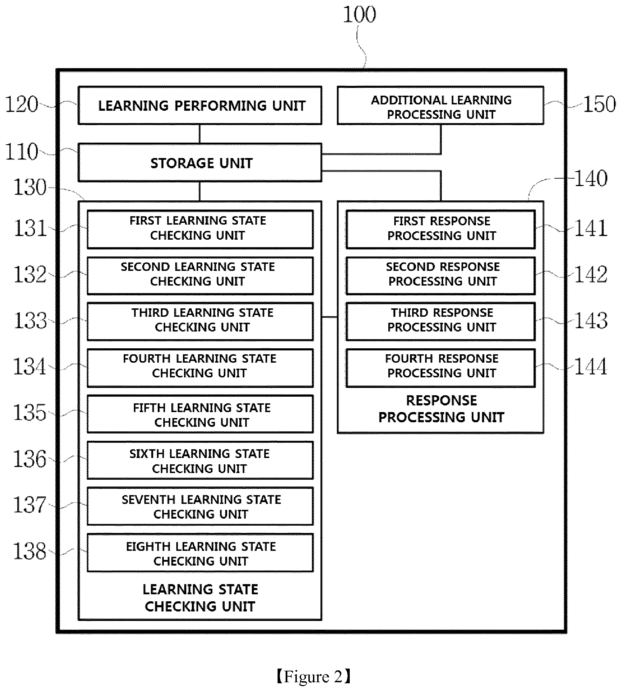

An example of concrete functional blocks of the learning contents providing apparatus 100 is as shown in FIG. 2.

As shown in FIG. 2, the learning contents providing apparatus 100 may include a storage unit 110, a learning performing unit 120, a learning state checking unit 130, a response processing unit 140, and an additional learning processing unit 150.

Here, the storage unit 110 stores a plurality of learning contents in which one learning text is matched with one learning correspondence text. For example, when the meaning of the English word 'vulnerable' is ' 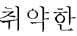 ', 'vulnerable' is a learning text and ' 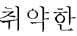 ' is a learning correspondence text corresponding to the learning text. However, this is defined for convenience and the opposite case is possible.

Accordingly, one learning contents is matching of one learning text and one learning correspondence text like 'vulnerable - 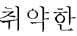 ', and such learning contents may be stored in plurality in the storage unit 110.

The learning performing unit 120 selects a preset number of learning contents among the plurality of learning contents stored in the storage unit 110 as a learning contents group, and performs a learning function by allowing a learning text of each of learning contents included in the learning contents group and a learning correspondence text corresponding thereto to be displayed.

For description of the present embodiment, it is assumed that the learning performing unit 120 sequentially includes four learning contents such as ' vulnerable - 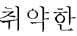 ', 'subject - 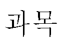 ', 'dormant - 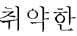 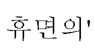 ' and 'account - 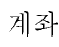 ' in the learning contents group.

In this case, the learning performing unit 120 may transmit the four learning contents to the user terminal 200 sequentially or at once to allow the four learning contents to be displayed on the user terminal 200. Accordingly, a user may view contents displayed on the user terminal 200 and may proceed learning.

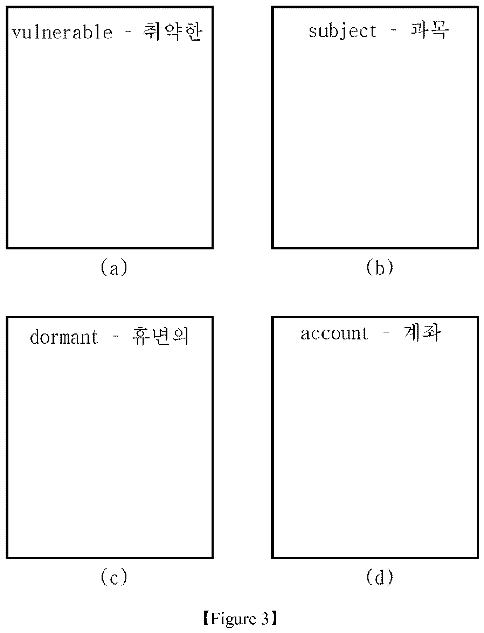

FIG. 3 shows an example in which the learning contents are sequentially displayed on the user terminal 200 under the control of the learning performing unit 120. That is, the learning contents may be displayed on the user terminal 200 in the order of (a), (b), (c), and (d) of FIG. 3.

The learning state checking unit 130 is for checking whether or not a user correctly memorizes learning contents, and performs a function of setting a question.

As shown in FIG. 2, the learning state checking unit 130 may include first to eighth learning state checking units 131 to 138, which are merely divided for convenience of description of each function.

On the other hand, the response processing unit 140 performs a function of processing a user response to the question set by the learning state checking unit 130 described above.

Here, when the user response is a voice signal, the response processing unit 140 may determine whether or not an answer to the question is correct by extracting a response text corresponding to the voice signal through a voice recognition process and comparing the response text with a text corresponding to the answer to the question.

That is, when the user terminal 200 transmits a voice signal corresponding to a user's question answering, the voice signal is converted into a text and compared with a previously stored text to determine whether or not the answer to the question is correct.

As another example, when a multiple choice question is presented to the user terminal 200, a user may determine the correct answer selection of a user by receiving a touch input signal of a user.

As shown in FIG. 2, the response processing unit 140 may include first to fourth response processing units 141, 142, 143 and 144, which are merely divided for convenience of description of each function as well.

Hereinafter, the function of each learning state checking unit 130 and the function of each response processing unit 140 will be described in detail. In order to help understanding, what each function block performs will be described in order based on the process of learning.

First, after the learning processing of the learning performing unit 120, the first learning state checking unit 131 sequentially performs processes of allowing the learning text to be displayed with respect to each learning contents included in the learning contents group and then waiting for a user response for a preset time.

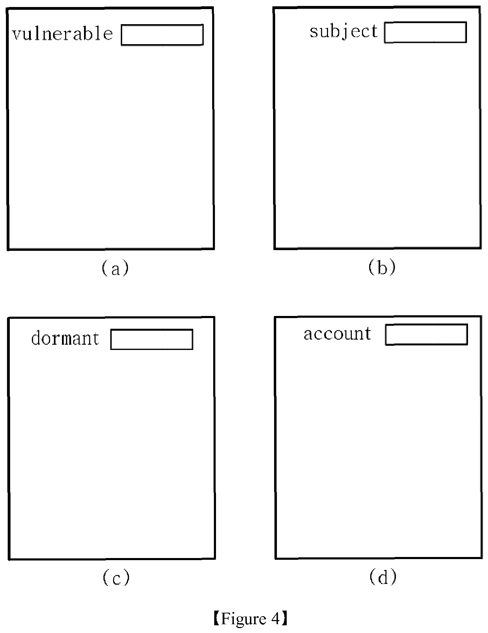

For example, as shown in FIG. 4, the first learning state checking unit 131 may wait for a user response for a preset time while displaying the learning text on the user terminal 200 and displaying the learning correspondence text in a hidden state. This may corresponds to a sort of question presentation about the learning content.

Referring to FIG. 4, a question may be presented in the order of A, B, C and D of FIG. 4.

For example, the first learning state checking unit 131 may wait for a user's response for one second in a state as shown in FIG. 4A, and then may display a screen as shown in FIG. 4B when one second elapses. Thereafter, the first learning state checking unit 131 may display a screen as shown in FIG. 4C when one second elapses again, and then may display a screen as shown in FIG. 4D when one second elapses again.

Here, the first learning state checking unit 131 may skip after showing the meaning of 'vulnerable' hidden in FIG. 4A before changing from the state of FIG. 4A to FIG. 4B, which is the same in another step. Accordingly, even if the answer to the question is wrong, a user has an opportunity to learn again. Such a function is also applicable to the second to eighth learning state checking units 132 to 138.

When a user response to the learning text is different from the learning correspondence text corresponding to the learning text during the processing of the first learning state checking unit 131, the first response processing unit 141 selectively includes the corresponding learning contents in a re-learning contents group.

Here, the including of the learning contents in re-learning contents group may include marking '1' when the answer is correct and marking '0' when the answer is incorrect. This is also the same in the case of the second to fourth response processing units 142, 143 and 144 described below.

For example, when a user response inputted within one second in the state as shown in FIG. 4A is ' 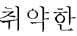 ', the first response processing unit 141 marks '1' for the corresponding learning contents, and when the inputted user response is not ' 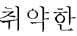 ', the first response processing unit 141 marks '0' for the corresponding learning contents.

After the completion of the processing of the first learning state checking unit 131, the second learning state checking unit 132 sequentially performs processes of allowing the learning text to be displayed for each learning contents included in the re-learning contents group and then waiting for a user response for a preset time.

For example, when the learning contents marked as '0' by the first response processing unit 141 are 'vulnerable - 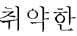 ' and 'account - 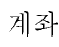 ', the second learning state checking unit 132 controls FIG. 4A and 4D to be again displayed at a certain time interval.

Thus, a user may again answer the wrong question.

Here, after the completion of the processing of the first response processing unit 141, the second learning state checking unit 132 may calculate a waiting time based on the amount of learning contents (i.e., the number of learning contents marked as '0') included in the re-learning contents group, and waits for a user response during the calculated waiting time.

This is to further increase the learning desire by minimizing the number of incorrect answers by further providing each question answering time in the next question answering process for a user who gives more wrong answers in the first question answering process.

On the other hand, for a user who obtains good grades in the first question answering process, the overall question answering time may be shortened by shortening the question answering time provided in the next question answering process. This function may be applied to the third to eighth learning state checking units 133 to 138 as well.

When the user response to the learning text is different from the learning correspondence text corresponding to the learning text during the processing of the second learning state checking unit 132, the first response processing unit 141 described above selectively re-includes the corresponding learning contents in the re-learning contents group.

In other words, the first response processing unit 141 removes the learning contents to which a user gives the correct answer from the re-learning contents group during the processing of the second learning state checking unit 132, and again includes the learning contents to which a user gives the incorrect answer in the re-learning contents group to allow the test (question presentation) to be carried out once more.

The functions of the first response processing unit 141 and the second learning state checking unit 132 may be repeatedly performed until no learning contents remain in the re-learning contents group.

When a user does not get the correct answer to the question of FIG. 4D during the processes of FIG. 4A and 4D, the learning contents providing apparatus 100 performs a test only for FIG. 4D, and this process is terminated when a user gets the correct answers to all the questions (learning contents). That is, when no learning contents remains in the re-learning contents group, the process is terminated.

On the other hand, when no learning contents remain in the re-learning contents group, the third learning state checking unit 133 may sequentially perform processes of allowing the learning correspondence text to be displayed for each learning contents included in the learning contents group and then waiting for a user response for a preset time.

Unlike the first learning state checking unit 131, the third learning state checking unit 133 requests a user to present the learning text corresponding to the learning correspondence text while displaying the learning correspondence text.

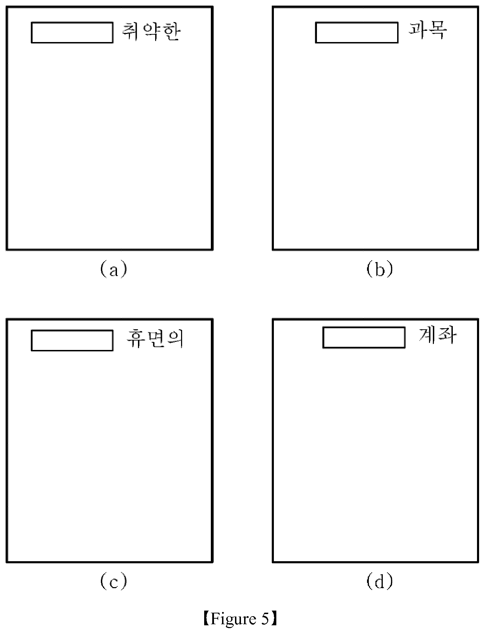

FIG. 5 shows a process of being displayed on the user terminal 200 according to the functions of the third learning state checking unit 133.

That is, questions are sequentially displayed on the user terminal 200 in the order of FIGS. 5A to 5D, a user needs to get the correct English words corresponding to each Korean words within a preset time (e.g., one second).

In this case, when a user response to the learning correspondence text is different from the learning text corresponding to the learning correspondence text during the processing of the third learning state checking unit 133, the second response processing unit 142 selectively includes the corresponding learning contents in the re-learning contents group.

For example, when a user gives wrong answers to the questions of FIG. 5B and 5D, the second response processing unit 142 marks 1 for the learning data of 'vulnerable - 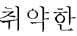 ' and 'dormant - 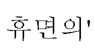 ' and marks 0 for the learning data of 'subject - 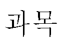 ' and the 'account - 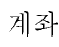 ', thereby allowing the learning data marked as 0 to be re-learned (question answering) as described later.

That is, after the completion of the processing of the third learning state checking unit 133, the fourth learning state checking unit 134 sequentially performs processes of allowing the learning correspondence text to be displayed for each learning contents included in the re-learning contents group and then waiting for a user response for a preset time.

That is, referring to the above-described example, the fourth learning state checking unit 134 may wait for a user response while allowing FIG. 5B and 5D to be displayed at a certain time interval.

In this case, when a user response to the learning correspondence text is different from the learning text corresponding to the learning correspondence text during the processing of the fourth learning state checking unit 134, the second response processing unit 142 selectively includes the corresponding learning contents in the re-learning contents group again.

For example, when a user presents 'subject' to the question of FIG. 5B but does not present 'account' to the question of FIG. 5D, the second response processing unit 142 may mark 0 for the 'account - 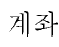 ' learning contents, thereby enabling repeated learning.

The functions of the second response processing unit 142 and the fourth learning state checking unit 134 may be repeatedly performed until no learning contents remain in the re-learning contents group. Since this is the same as the process in which the functions of the first response processing unit 141 and the second learning state checking unit 132 are repeatedly performed, a repeated description will be omitted.

In regard to the learning contents on which the learning has been performed, the learning text is first displayed, and a user is questioned on the learning correspondence text matching with the learning text. After the completion of this process, when the learning correspondence text is displayed and a user is questioned on the learning text matching with the learning correspondence text, the learning efficiency of a user can be significantly increased.

In other words, most people tend to remember based on the location where the learning contents are displayed. When a user is questioned on the learning correspondence text and then is questioned on the learning text thereafter, the memory concentrated on the learning contents rather than the memory dependent on a specific location may remain for a longer time.

On the other hand, after the repetition of the second response processing unit 142 and the fourth learning state checking unit 134 is completed, the fifth learning state checking unit 135 sequentially performs processes of selecting the first learning contents and the second learning contents from the learning contents included in the learning contents group according to the order, extracting learning texts of the first learning contents and the second learning contents, displaying the learning texts simultaneously and then waiting for a user response for a preset time.

For example, the fifth learning state checking unit 135 selects 'vulnerable - 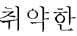 ' as the first learning contents and 'subject - 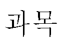 ' as the second learning contents according to the order included in the learning contents group, extracts and then simultaneously displays 'vulnerable' that is the learning text of the first learning contents and 'subject' that is the learning text of the second learning contents, and then waits for a user response for a preset time.

Thereafter, the fifth learning state checking unit 135 selects 'dormant - 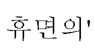 ' as the first learning contents and 'account - 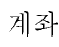 ' as the second learning contents according to the order included in the learning contents group, extracts and then simultaneously displays 'dormant' that is the learning text of the first learning contents and 'account' that is the learning text of the second learning contents, and then waits for a user response for a preset time.

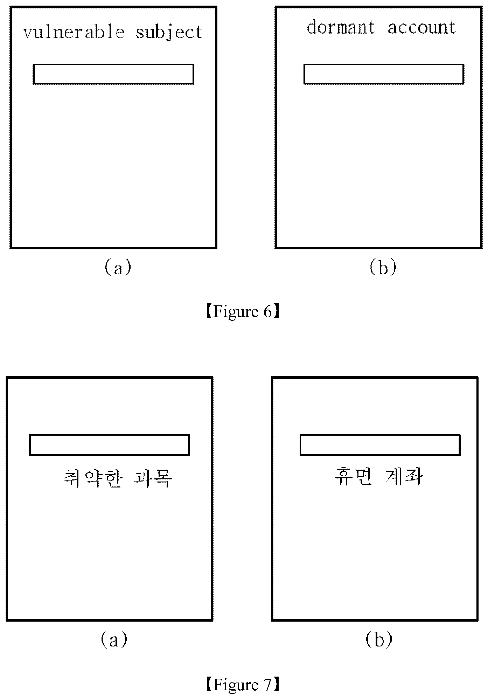

This process is shown in FIG. 6.

Here, when a user response during the processing of the fifth learning state checking unit 135 is different from a successive pair of the learning correspondence text of the first learning contents and the learning correspondence text of the second learning contents, the third response processing unit 143 selectively includes the corresponding pair of the first learning contents and the second learning contents in the re-learning contents group.

For example, as shown in FIG. 6A, when the user response is ' 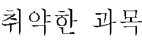 ', the third response processing unit 143 marks '1' for the pair of the first learning contents and the second learning contents ('vulnerable - 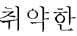 ', 'subject - 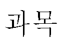 '), and when the user response is not' 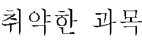 ', the third response processing unit 143 marks '0' for the pair of the first learning contents and the second learning contents ('vulnerable - 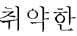 ', 'subject - 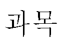 '), thereby enabling repeated learning later as described below.

After completion of the processing of the fifth learning state checking unit 135, the sixth learning state checking unit 136 sequentially performs processes of successively displaying learning texts for each of the first learning contents and the second learning contents included in the re-learning contents group and then waiting for a user response for a preset time.

For example, when a user fails to correctly answer all the questions through the process of FIG. 6, the sixth learning state checking unit 136 repeats the processes of FIG. 5A and 5B again. When a user correctly answers only the question of FIG. 6A, the sixth learning state checking unit 136 repeats the process of FIG. 5B again.

In this case, when a user response during the processing of the sixth learning state checking unit 136 is different from a successive pair of the learning correspondence text of the first learning contents and the learning correspondence text of the second learning contents, the third response processing unit 143 selectively includes the corresponding pair of the first learning contents and the second learning contents in the re-learning contents group again. The functions of the third response processing unit 143 and the sixth learning state checking unit 136 are repeatedly performed until no pair of the first learning contents and the second learning contents remains in the re-learning contents group. Since this is the same as the example described above, a repeated description will be omitted.

On the other hand, when no pair of the first learning contents and the second learning contents pair remains in the re-learning contents group, the seventh learning state checking unit 137 selects the first learning contents and the second learning contents from the learning contents included in the learning contents group according to the order, extracts learning texts of the first learning contents and the second learning contents, displays the learning texts simultaneously and then waits for a user response for a preset time.

In addition, when a user response during the processing of the seventh learning state checking unit 137 is different from a successive pair of the learning text of the first learning contents and the learning text of the second learning contents, the fourth response processing unit 144 selectively includes the corresponding pair of the first learning contents and the second learning contents in the re-learning contents group.

Then, after completion of the processing of the seventh learning state checking unit 137, the eighth learning state checking unit 138 sequentially performs processes of successively and simultaneously displaying learning correspondence texts for each pair of the first learning contents and the second learning contents included in the re-learning contents group and then waiting for a user response for a preset time.

Thereafter, when a user response during the processing of the eighth learning checking unit is different from a successive pair of the learning text of the first learning contents and the learning text of the second learning contents, the fourth response processing unit 144 selectively includes the corresponding pair of the first learning contents and the second learning in the re-learning contents group again. The functions of the fourth response processing unit 144 and the eighth learning state checking unit 138 are repeatedly performed until no pair of the first learning contents and the second learning contents remains in the re-learning contents group.

The above-described process performed by the seventh learning state checking unit 137, the fourth response processing unit 144, and the eighth learning state checking unit 138 is as shown in FIG. 7.

In other words, a user needs to answer 'vulnerable subject' to a question ' 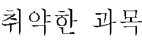 ' and answer 'dormant account' to a question ' 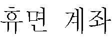 '.

Since the repeated performing of the question for the wrong answer is the same as that in the other embodiments described above, a repeated description will be omitted.

Thus, when the test is not performed only for one word and the learning is again performed by binding two contents in the order of learning, the learning efficiency is improved according to the relation between the learned contents, and the memory remains for a longer time.

That is, as shown in FIG. 6 or 7, when two words are bound in the order of learning and additional learning is performed, the memory can remains for a longer time than learning only one word at a time.

In the above example, it is assumed that each of learning contents is an English word and another word matching therewith in meaning, but the present invention is not limited thereto.

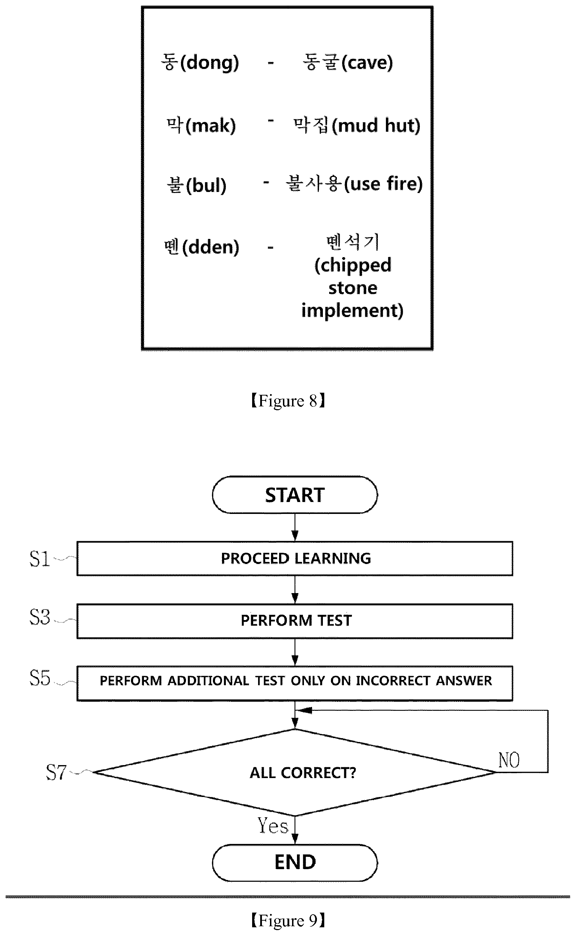

As shown in FIG. 8, the learning text of each learning contents may be a kind of 'abbreviation', and the learning correspondence text may be an 'original word (i.e., extended word)'.

In FIG. 8, it is assumed that the extended word corresponds to the learning correspondence text, and the first letter of the extended word corresponds to the learning text, but the present invention is not necessarily limited thereto.

On the other hand, the additional learning processing unit 150 sequentially extracts the learning text of each learning contents contained in the learning contents group to output a voice having a tone, and then stores a voice input of a user in the storage unit 110.

In particular, the additional learning processing unit 150 may perform all processes of sequentially extracting the learning texts of each learning contents included in the learning contents group to output the learning text as a voice having a tone and sequentially extracting the learning correspondence texts of each learning contents included in the learning contents group to output a voice having a tone, and then may store the voice input of a user in the storage unit 110.

In addition, the additional learning processing unit 150 also outputs a user's voice input stored in the storage unit 110 according to a user's selection.

Hereinafter, an overall learning process of the learning contents providing apparatus 100 according to an embodiment of the present invention will be described with reference to FIG. 9.

First, the learning contents providing apparatus 100 provides registered learning contents to a user such that learning is performed (operation S1).

After the learning is completed, the learning contents providing apparatus 100 may perform a test, and in this case, the test may be performed in such a manner that a part of the learning contents is not displayed for a preset time (operation S3).

Thereafter, the learning contents providing apparatus 100 performs an additional test on only the contents (learning contents) that are incorrectly answered by a user (operation S5), and this process is repeated until no question incorrectly answered by a user remains. (operation S7).

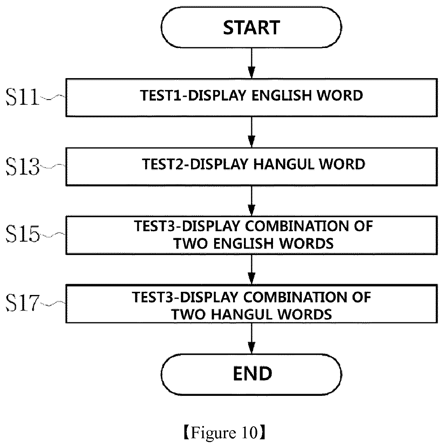

FIG. 10 illustrates a test procedure in FIG. 9 in order. FIG. 10 illustrates a test procedure for learning contents including 'English word-Hangul meaning' as shown in FIG. 2.

In performing the test on the learned contents, the learning contents providing apparatus 100 first displays an English word so as to present the Hangul meaning corresponding to each English word (operation S11).

When a user gives the correct answer of the Hangul meanings to all English words through repetition of the this process, the learning contents providing apparatus 100 displays the Hangul meanings to allow a user to present English words corresponding to the Hangul meanings (operation S13).

When a user gives the correct answer of the English words to all Korean meanings through repetition of this process, the learning contents providing apparatus 100 combines and displays two English words of the already-learned English words according to the order, and allows a user to present a Korean meaning corresponding to the combined English phrase (operation S15).

Thereafter, the learning contents providing apparatus 100 combines and displays two Hangul meanings of the already-learned Hangul meanings according to the order, and allows a user to present an English phrase corresponding to the combined Hangul meaning (operation S17).

In the above-described embodiments, the case where two words are combined and re-learned is mainly described. However, in order to complete the sentence, the learning including other words may be performed or the words of multiples of 2 may be combined to be learned again and this process may be infinitely extended.

In addition, the above-mentioned response processing unit 140 performs processing using the binary principle based on 0 and 1. Specifically, the question (test) to the learning contents is set such that a user answers only during a preset time, and according to the result, the learning contents are marked as 0 and 1 and dividedly managed. Among the learning contents, learning contents marked as 0 are repeatedly learned. In addition, learning contents combinations (e.g., word combinations) are generated in a multiple of 2, and then learning may be performed. Thus, by applying the binary principle to the learning method, the present invention can achieve a considerable learning efficiency.

In particular, when a user cannot answer a question immediately (within one second as a preset time), it is considered that a user does not know the question. Thus, through the reflexive learning, the memory about the learned contents can remain for a long time.

In the above-described embodiments, it has been mainly described that the output of the learning text or the learning correspondence text by the first learning state checking unit 131, the second learning state checking unit 132, the third learning state checking unit 133, the fourth learning state checking unit 134, the fifth learning state checking unit 135, the sixth learning state checking unit 136, the seventh learning state checking unit 137 and the eighth learning state checking unit 138 are displayed on the screen. However, the output of the learning text or the learning correspondence text may also be outputted as a voice having a tone.

For example, the learning text or the learning correspondence text may be outputted together with a certain background sound and a tune corresponding to the background sound, thereby improving the memory of a learner.

Also, the learning contents providing apparatus 100 may extract the learning texts in order from the learning contents, output the learning texts as a rhythmical voice, and allow a user to perform additional learning.

For example, after a user learns the English words 'vulnerable' and 'subject' as described above, the learning contents providing apparatus 100 may also output a learning text 'I have a vulnerable subject' or a learning correspondence text ' 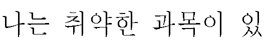 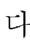 ' with a rhythmical voice one by one or one after another.

Naturally, it is assumed that a user has learned about English words 'I', 'have', and 'a'.

In this case, a user may repeat with a voice, and the learning contents providing apparatus 100 may store a voice input of a user and then play back the voice later.

As another example, after learning about the text contents as shown in FIG. 8, a content 'Paleolithic people lived in a cave or a mud hut, used the fire, and lived migratory life while using chipped stone implement' may be outputted as a rhythmical voice. In this case, a user speaks with a voice, and the learning contents providing apparatus 100 may store a voice input of a user and then play back the voice later.

Complete learning can be accomplished through this process.

Meanwhile, the process of performing each of the above-described embodiments can be performed by a program or an application stored in a certain recording medium (e.g., a computer-readable medium). Here, the recording medium includes all of an electronic recording medium such as a Random Access Memory (RAM), a magnetic recording medium such as a hard disk, and an optical recording medium such as a Compact Disk (CD).

In this case, the program stored in the recording medium may be executed on hardware such as a computer or a smart phone to perform each of the above embodiments. In particular, at least one of the functional blocks of the learning contents providing apparatus according to an embodiment of the present invention described above can be implemented by such a program or an application.

### [Industrial Applicability]

As described above, according to an embodiment of the present invention, since learning is performed based on the binary principle, the learning efficiency is improved and the learning contents once memorized remain for a long time.

## Claims

1. A method of controlling a learning contents providing apparatus, the method comprising the steps of:
(a) performing learning by selecting a preset number of learning contents as a learning contents group in a state of comprising a plurality of learning contents in which one learning text and one learning correspondence text match with each other and allowing a learning text of each of learning contents comprised in the learning contents group and a learning correspondence text corresponding thereto to be displayed;
(b) sequentially performing processes of allowing the learning text to be displayed for each of learning contents comprised in the learning contents group and then waiting for a user response for a preset time after the step (a);
(c) selectively comprising the corresponding learning contents in a re-learning contents group when a user response to the learning text is different from the learning correspondence text corresponding to the learning text during the step (b); and
(d) sequentially performing processes of allowing the learning text to be displayed for each of learning contents comprised in the re-learning contents group and then waiting for a user response for a preset time after the step (b).

2. The method of claim 1, wherein the step (d) comprises calculating a waiting time based on the amount of learning contents comprised in the re-learning contents group after the step (c) and waiting for the user response for the calculated waiting time.

3. The method of claim 2, further comprising the steps of:
(e) selectively re-comprising the corresponding learning contents in the re-learning contents group when the user response to the learning text is different from the learning correspondence text corresponding to the learning text during the step (d);
(f) sequentially performing processes of repeating the steps (d) to (e) until no learning contents remains in the re-learning contents group according to a determination result after the step (d) and allowing the learning correspondence text for each of learning contents comprised in the learning contents group to be displayed and then waiting for a user response for a preset time when no learning contents remains in the re-learning contents group;
(g) selectively comprising the corresponding learning contents in the re-learning contents group when the user response to the learning correspondence text is different from the learning text corresponding to the learning correspondence text;
(h) sequentially performing processes of allowing the learning text to be displayed for each of learning contents comprised in the re-learning contents group and then waiting for a user response for a preset time after the step (f)
(i) selectively re-comprising the corresponding learning contents in the re-learning contents group when the user response to the learning correspondence text is different from the learning text corresponding to the learning correspondence text during the step (h);
(j) repeating the steps (h) to (i) until no learning contents remains in the re-learning contents group according to a determination result after the step (h);
(k) sequentially performing processes of selecting first learning contents and second learning contents from the learning contents comprised in the learning contents group according to the order, extracting and simultaneously displaying learning texts of the first learning contents and the second learning contents and then waiting for a user response for a preset time after the step (j);
(l) selectively re-comprising a successive pair of the first learning contents and the second learning contents in the re-learning contents group when the user response during the step (k) is different from the successive pair of the learning correspondence text of the first learning contents and the learning correspondence text of the second learning contents;
(m) repeating the steps (k) to (l) until no pair of the first learning contents and the second learning contents remains in the re-learning contents group according to a determination result after the step (k);
(n) sequentially performing processes of selecting first learning contents and second learning contents from the learning contents comprised in the learning contents group according to the order, extracting and simultaneously displaying learning correspondence texts of the first learning contents and the second learning contents and then waiting for a user response for a preset time when no learning contents remains in the re-learning contents group after the step (m);
(o) selectively re-comprising a successive pair of the first learning contents and the second learning contents in the re-learning contents group when the user response during the step (n) is different from the successive pair of the learning text of the first learning contents and the learning text of the second learning contents; and
(p) repeating the steps (n) to (o) until no pair of the first learning contents and the second learning contents remains in the re-learning contents group according to a determination result after the step (n).

4. The method of claim 1, wherein when a user response is a voice signal, the step (c) comprises extracting a response text corresponding to the voice signal through a voice recognition process and comparing the response text with the learning correspondence text of the learning contents.

5. A learning contents providing apparatus comprising:
a storage unit for storing a plurality of learning contents in which one learning text and one learning correspondence text match with each other;
a learning performing unit for performing learning by selecting a preset number of learning contents among the plurality of learning contents stored in the storage unit as a learning contents group and allowing a learning text of each of learning contents comprised in the learning contents group and a learning correspondence text corresponding thereto to be outputted;
a first learning state checking unit sequentially performing processes of allowing the learning text to be outputted for each of learning contents comprised in the learning contents group and then waiting for a user response for a preset time after the learning processing of the learning performing unit;
a first response processing unit selectively comprising the corresponding learning contents in a re-learning contents group when a user response to the learning text is different from the learning correspondence text corresponding to the learning text during the processing of the first learning state checking unit; and
a second learning state checking unit sequentially performing processes of allowing the learning text to be outputted for each of learning contents comprised in the re-learning contents group and then waiting for a user response for a preset time after the processing of the first learning state checking unit.

6. The learning contents providing apparatus of claim 5, wherein the second learning state checking unit calculates a waiting time based on the amount of the learning contents comprised in the re-learning contents group after the processing of the first response processing unit, and waits for a user response for the calculated waiting time.

7. The learning contents providing apparatus of claim 5, wherein the first processing unit selectively re-comprises the corresponding learning contents in the re-learning contents group when the user response to the learning text is different from the learning correspondence text corresponding to the learning text during the processing of the second learning state checking unit, and functions of the first response processing unit and the second learning state checking unit are repeatedly performed until no learning contents remains in the re-learning contents group.

8. The learning contents providing apparatus of claim 5, wherein when a user response is a voice signal, the first response processing unit extracts a response text corresponding to the voice signal through a voice recognition process and compares the response text with the learning correspondence text of the learning contents, and the first response processing unit, the second response processing unit, the third response processing unit, and the fourth response processing unit perform processing using a binary principle based on 0 and 1.

9. The learning contents providing apparatus of claim 5, wherein the first learning state checking unit, the second learning state checking unit, the third learning state checking unit, the fourth learning state checking unit, the fifth learning state checking unit, the sixth learning state checking unit, the seventh learning state checking unit, and the eighth learning state checking unit output the learning text and the learning correspondence text by at least one of a screen display and a voice output having a melody.

10. The learning contents providing apparatus of claim 5, further comprising an additional learning processing unit for sequentially extracting learning texts of the learning contents comprised in the learning contents group, outputting the learning texts as a voice having a melody, and then storing a voice input of a user, wherein the additional learning processing unit sequentially extracts the learning texts of the learning contents comprised in the learning contents group to output the learning text as a voice having a melody, sequentially extracts the learning correspondence texts of the learning contents comprised in the learning contents group, stores a voice input of a user, and then outputs the inputted voice input of a user in accordance with a selection of a user.
